# EUROPEAN PATENT SPECIFICATION

(11) **EP 4 120 290 B1**
(45) Date of publication and mention of the grant of the patent: **09.09.2026**
(21) Application number: 21185020.1
(22) Date of filing: 12.07.2021
(51) Int. Cl.: G21K 1/00, G06N 10/40, B82Y 10/00

(54) **MICRO-FABRICATED DEVICE FOR CONTROLLING TRAPPED IONS AND METHOD OF MANUFACTURING THE SAME BY MICRO-FABRICATION**
MIKROGEFERTIGTE VORRICHTUNG ZUR STEUERUNG VON EINGEFANGENEN IONEN UND VERFAHREN ZUR HERSTELLUNG DERSELBEN DURCH MIKROFERTIGUNG
DISPOSITIF MICRO-FABRIQUÉ POUR COMMANDER DES IONS PIÉGÉS ET SON PROCÉDÉ DE FABRICATION PAR MICRO-FABRICATION

(43) Date of publication of application: 18.01.2023
(73) Proprietor: Infineon Technologies Austria AG, 9500 Villach (AT); Eidgenössische Technische Hochschule (ETH Zürich), 8092 Zürich (CH); Universität Innsbruck, 6020 Innsbruck (AT)
(72) Inventor: ROESSLER, Clemens, 9500 Villach (AT); AUCHTER, Silke, 9500 Villach (AT); STOCKER, Gerald, 9584 Finkenstein (AT); SGOURIDIS, Sokratis, 9520 Annenheim (AT); DECAROLI, Chiara, 8049 Zürich (CH); HOME, Jonathan, 8123 Ebmatingen (CH); VALENTINI, Marco, 6020 Innsbruck (AT); COLOMBE, Yves, 6020 Innsbruck (AT); HOLZ, Philip, 6020 Innsbruck (AT)
(74) Representative: Lambsdorff & Lange Patentanwälte Partnerschaft mbB

(56) References cited:
- EP-A1- 3 503 160
- US-A1- 2013 105 921
- US-B1- 11 056 332

## Description

### Technical Field

This disclosure relates generally to the field of trapped ions, and in particular to micro-fabricated devices for controlling trapped ions for quantum computing and methods of manufacturing such devices by using micro-fabrication techniques.

### Background

Trapped ions are one of the most promising candidates for use as qubits (quantum bits) in quantum computers since they can be trapped with long lifetimes in a scalable array by virtue of electromagnetic fields. Presently, the most advanced ion traps can control about 50 qubits individually and can maintain up to 16 qubits in a fully entangled state. Future quantum computers will need to increase the number of controllable qubits to more than 100 or even 1000 to outperform classical supercomputers. Further, the number of ions used for each qubit will in future be raised to about 6 to 100 ions in order to allow for more efficient error-correction during quantum computing.

With increasing the number of ions, the area requirement for devices for controlling trapped ions such as, e.g., quantum computing devices increases. Assuming a mean distance between neighboring ions of 10 to 100 µm and a number of 10000 ions, the total required area may be as large as 100 cm² to 1 m². Hence, increasing the number of simultaneously trapped ions while maintaining the ability to control and measure them individually is one of the main challenges in controlling trapped ions and, in particular, in progressing to practical quantum computing.

EP 3 503 160 A1 describes a method of fabricating an ion trap including forming cavity parts on first and second semiconductor wafers and bonding together the wafers with the cavity parts aligned to together forming a cavity.

US 2013/105921 A1 describes a MEMS device including a base layer formed from an electrical insulating material including, e.g., fused silica, fused quartz, glass, ceramic, alumina, sapphire, or quartz.

US 11 056 332 B1 describes a RF surface ion trap chip including four or more metallization layers separated by interlayer dielectric.

A problem which arises when scaling-up the number of ions is to provide for a high number of trap electrodes (e.g. more than 10.000) having manufacturing tolerances in the micrometer scale while the device as such has macroscopic dimensions. Further, the larger the device the more sophisticated concepts are needed for selectively coupling and decoupling laser light to the ions and for protecting the device against external and internal interferences. Further, high mechanical stability of the devices is a major issue for scaling to large number of ions.

### Summary

According to the invention, a device for controlling trapped ions includes a first substrate comprising a semiconductor and/or dielectric material. A first micro-fabricated electrode structure is disposed at a main side of the first substrate. The device further includes a second substrate comprising a semiconductor and/or dielectric material. A second micro-fabricated electrode structure is disposed at a main side of the second substrate opposite the main side of the first substrate. A plurality of spacer members is disposed between the first substrate and the second substrate. At least one ion trap is configured to trap ions in a space between the first substrate and the second substrate. The first micro-fabricated electrode structure and the second micro-fabricated electrode structure comprise electrodes of the ion trap. A multi-layer metal interconnect is formed on the first substrate and electrically connected to the first micro-fabricated electrode structure. An insulating dielectric material is arranged between metal layers of the multi-layer metal interconnect. The plurality of spacer members are bonded to the first substrate and to the second substrate.

According to the invention, a method of manufacturing a device for controlling trapped ions comprises providing a first wafer comprising a semiconductor and/or dielectric material and forming a pattern of multi-layer metal interconnects and insulating dielectric material arranged between metal layers of the multi-layer metal interconnect on the first wafer. The method further comprises forming a pattern of first electrode structures at a main side of the first wafer, wherein each first electrode structure electrically connects to a multi-layer metal interconnect. A second wafer comprising a semiconductor and/or dielectric material is provided and a pattern of second electrode structures is formed at a main side of the second wafer. A pattern of spacer members is formed on the main side of the first wafer or on the main side of the second wafer. The first wafer and the second wafer are bonded together, with the pattern of spacer members disposed between the first wafer and the second wafer. The devices for controlling trapped ions are singulated from the bonded-together first and second wafers by wafer dicing.

### Brief description of the drawings

The elements of the drawings are not necessarily to scale relative to each other. Like reference numerals designate corresponding similar parts. The features of the various illustrated embodiments can be combined unless they exclude each other and/or can be selectively omitted if not described to be necessarily required. Embodiments are depicted in the drawings and are exemplarily detailed in the description which follows.
Figure 1 is a schematic cross-sectional view of an exemplary device for controlling trapped ions.
Figure 2A is a schematic cross-sectional view of an exemplary device for controlling trapped ions having a micro-fabricated electrode structure formed by a highly doped layer of a semiconductor material.
Figure 2B is a schematic top view of the exemplary device for controlling trapped ions shown in Figure 2A.
Figures 3A-3C are top views of a first substrate, a plurality of spacer members and a second substrate of an exemplary device for controlling trapped ions having a similar construction as the device for controlling trapped ions shown in Figures 2A-2B.
Figure 4 is a perspective view on a top side of an exemplary device for controlling trapped ions composed of the first substrate, the plurality of spacer members and the second substrate shown in Figures 3A-3C.
Figure 5A is a schematic cross-sectional view of an exemplary device for controlling trapped ions having micro-fabricated electrode structures formed by structured metallization layers arranged on a first substrate and on a second substrate.
Figure 5B is a schematic top view of the exemplary device for controlling trapped ions shown in Figure 5A.
Figure 6A is a schematic cross-sectional view of an exemplary device for controlling trapped ions having spacer members of a semiconductor material coated by a metal layer.
Figure 6B is a schematic top view of the exemplary device for controlling trapped ions shown in Figure 6A.
Figure 7A is a schematic cross-sectional view of an exemplary device for controlling trapped ions having spacer members formed by metal bumps.
Figure 7B is a schematic top view of the exemplary device for controlling trapped ions shown in Figure 7A.
Figure 8 is a flowchart illustrating stages of a method of manufacturing devices for controlling trapped ions.

### Detailed description

The words "over" or "on" or "beneath" with regard to a part, element or material layer formed or located or disposed or arranged or placed "over" or "on" or "beneath" a surface may be used herein to mean that the part, element or material layer be located (e.g. placed, formed, arranged, disposed, placed, etc.) "directly on" or "directly under", e.g. in direct contact with, the implied surface. The word "over" or "on" or "beneath" used with regard to a part, element or material layer formed or located or disposed or arranged or placed "over" or "on" or "beneath" a surface may, however, either be used herein to mean that the part, element or material layer be located (e.g. placed, formed, arranged, deposited, etc.) "indirectly on" or "indirectly under" the implied surface, with one or more additional parts, elements or layers being arranged between the implied surface and the part, element or material layer.

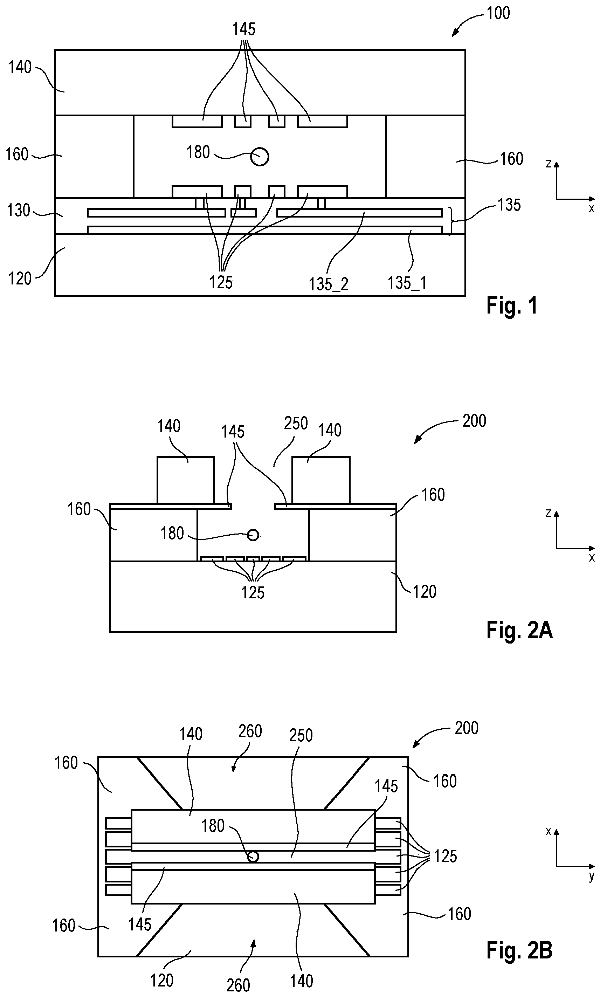

Referring to Figure 1 a device 100 for controlling trapped ions may include a first substrate 120 and a second substrate 140. The second substrate 140 is disposed over the first substrate 120 in Z-direction. The Z-direction may represent the height dimension of the device 100.

The second substrate 140 is spaced apart in Z-direction from the first substrate 120 so as to define a space between the first substrate 120 and the second substrate 140.

The first and the second substrates 120, 140 may be substantially planar (except for surface structures created e.g. by electrodes, oxide or passivation) and may be oriented parallel to each other. In Figure 1, parallelism of the first and second substrates 120, 140 is exemplarily depicted in the X-direction and may, e.g., also apply to the Y-direction. The X-direction and the Y-direction are perpendicular to each other and define a plane in the width and length directions of the device 100 which is normal to the Z-direction.

The first substrate 120 and/or the second substrate 140 may, e.g., comprise or be made of a semiconductor material, e.g. silicon or silicon carbide or silicon-on-insulator (SOI). The first substrate 120 and/or the second substrate 140 may, e.g., be a micro-structured semiconductor chip. In other examples, the first substrate 120 and/or the second substrate 140 may comprise or be made of a dielectric material such as, e.g., fused silica or sapphire.

The distance between the first substrate 120 and the second substrate 140 may be in a range between, e.g., 50 µm to 1000 µm, in particular 100 µm to 400 µm, or 200 µm to 300 µm. The first substrate 120 and the second substrate 140 may, e.g., have each a thickness in a range between, e.g., 250 µm to 1500 µm, in particular 300 µm to 1000 µm, more in particular 400 µm to 750 µm or 500 µm to 600 µm.

The first substrate 120 is provided with a first micro-fabricated electrode structure 125 disposed at a main side of the first substrate 120, e.g. a top side of the first substrate 120. The second substrate 140 is provided with a second micro-fabricated electrode structure 145 disposed at a main side of the second substrate opposite the main side of the first substrate 120. That is, the second micro-fabricated electrode structure 145 may, e.g., be implemented at a bottom side of the second substrate 140.

Micro-fabrication techniques for electrode formation and structuring may, e.g., involve photolithography methods (e.g. including photoresist application, patterning, etching) and/or deposition techniques (e.g. chemical vapor deposition (CVD), physical vapor deposition (PVD), sputtering) and/or plating techniques (e.g. electroless plating, galvanic plating) for applying insulation layers and metal layers. Further, micro-fabrication techniques for electrode formation and structuring may include etching processes for structuring photoresist layers, insulating layers and metal layers and/or semiconductor doping techniques for forming electrodes in semiconductor material.

As will be described further below in more detail, the space defined between the first substrate 120 and the second substrate 140 includes one or a plurality of ion traps each configured to trap one or a plurality of ions 180 in the space (only one ion 180 is illustrated in Figure 1 for ease of illustration). The first micro-fabricated electrode structure 125 and the second micro-fabricated electrode structure 145 form electrodes of these ion traps. The location of the ions 180 can be controlled by the one or more ion traps by virtue of electrical voltages applied to the first micro-fabricated electrode structure 125 and the second micro-fabricated electrode structure 145. For instance, the ions 180 can be moved in the space in one or more lateral directions (e.g. in the X-direction or in the Y-direction or in any direction lying in a plane which is normal to the Z-direction) by virtue of AC and DC voltages separately coupled to specific electrodes of the first micro-fabricated electrode structure 125 and the second micro-fabricated electrode structure 145.

A multi-layer metal interconnect 135 is formed on the first substrate 120 and electrically connected to the first micro-fabricated electrode structure 125. The multi-layer metal interconnect 135 may also be formed by micro-fabrication, i.e. may be a micro-fabricated multi-layer metal interconnect 135, wherein a dielectric material 130 may be arranged between the metal layers of the multi-layer metal interconnect 135. Further, the dielectric material 130 may also be arranged below the lowest metal layer and the first substrate 120 (this bottom dielectric layer is not shown). The dielectric material 130 may, e.g., be an oxide or nitride material.

For instance, the multi-layer metal interconnect 135 may include a first metal layer 135_1 and a second metal layer 135_2. The first metal layer 135_1 may, e.g., be a shielding layer and the second metal layer 135_2 may, e.g., be structured as an electrical redistribution layer. The second metal layer 135_2 may electrically connect to the (separate) electrodes of the first micro-fabricated electrode structure 125. This allows the formation of complex electrode structures and insular electrodes in the first micro-fabricated electrode structure 125.

The metal layers 135_1, 135_2 may be manufactured during semiconductor processing. As mentioned above, insulating layers of the dielectric material 130 between the metal layers 135_1, 135_2 may, e.g., comprise or be of silicon nitride and/or silicon oxide.

In the example of Figure 1, the first substrate 120 is the bottom substrate and the second substrate 140 is the top substrate. However, it is likewise possible that the first substrate 120 is the top substrate and the second substrate 140 is the bottom substrate. Further, in Figure 1 only the first substrate 120 is equipped with a micro-fabricated multi-layer metal interconnect 135, while the electrodes of the second micro-fabricated electrode structure 145 may be electrically connected to external circuitry by means other than a micro-fabricated multi-layer metal interconnect. However, it is also possible that both substrates 120, 140 are equipped with a multi-layer metal interconnect 135 as described above.

In all embodiments disclosed herein, the device 100 for controlling trapped ions provides for three-dimensional ion trap geometries such as, e.g., featured by linear Paul trap(s). Such three-dimensional trap geometries distinguish over so-called surface-electrode trap geometries (which are two-dimensional in nature) by allowing substantially higher potential depths and higher trap frequencies. Differently put, trapping ions between lower and upper micro-fabricated electrode structures 125, 145 which can be structured with micrometer or sub-micrometer scale precision and alignment accuracy allows achieving more complex electrode layouts without loss of controllability of the trapped ions as offered by the tree-dimensional trap geometry. The combination of micro-fabrication techniques for trap electrode structuring and three-dimensionality of trap design as disclosed herein is crucial for allowing scalability to higher number of ions or qubits.

A plurality of spacer members 160 is disposed between the first substrate 120 and the second substrate 140. The spacer members 160 (together with the optional dielectric material 130) define the spacing between the first substrate 120 and the second substrate 140. As will be described in more detail further below, the spacer members 160 may, e.g., comprise or be of glass, of a semiconductor material coated by a metal layer or of bulk metal (e.g. metal bumps).

The spacer members 160 are bonded to the first substrate 120 and/or to the second substrate 140 by wafer-bonding techniques chosen to be suitable for the material of the spacer members 160 and the material of the first substrate 120 and the material of the second substrate 140 (or for the materials of respective layers formed on the first substrate 120 and/or on the second substrate 140 and/or on the spacer members 160 used as bonding interface layers). For instance, glass bonding techniques or eutectic bonding techniques or anodic bonding techniques or thermocompression bonding techniques may be applied.

Figures 2A-2B illustrate an embodiment of a device 200 for controlling trapped ions. The device 200 for controlling trapped ions may be implemented in accordance with the description of the device 100 for controlling trapped ions of Figure 1. Therefore, reference is made to the above description in order to avoid reiteration.

More specifically, in device 200 for controlling trapped ions the first substrate 120 and/or the second substrate 140 may be formed of a semiconductor material, e.g. silicon. In this example, the spacer members 160 may be of glass. The first micro-fabricated electrode structure 125 is, in this example, made of a metal material such as, e.g., Au. Other metals are also possible. The second micro-fabricated electrode structure 145 is, in this example, made of a highly doped layer of silicon (so-called degenerate silicon). Alternatively, the second micro-fabricated electrode structure 145 may also be made of a metal material such as, e.g., Au.

A top side opening 250 is provided in the second substrate 140 to provide for optical access to the ion trap formed between the first micro-fabricated electrode structure 125 and the second micro-fabricated electrode structure 145. This optical access allows laser light to be introduced into the ion trap(s) in the Z-direction. For instance, if the ion trap(s) form(s) a so-called processing zone, quantum computing typically requires the access of laser light for laser-based state preparation of trapped ions and the access of laser light for reading out the qubit states. Further, fluorescence light from the ions needs to be collected for state measurement. In addition, laser light may be needed for ion cooling.

Alternatively or additionally, the top side opening 250 may be used for loading neutral atoms into the device 200, which may then be ionized (by use of laser light) to generate the trapped ions.

Further, the device 200 may provide for lateral optical access to the central ion trap zone. To this end, the spacer members 160 may, e.g., be aligned with corners of the first substrate 120 and/or of the second substrate 140 and may define a free space 260 for lateral optical access. The free space 260 may, e.g., have a tapering or trapezoidal shape.

As the top side opening 250 and the second micro-fabricated electrode structure 145 may both be formed by micro-fabrication methods, high accuracy and alignment (in the sub-micrometer range) can be obtained. Further, wafer bonding techniques allow to provide for alignment accuracy between the first substrate 120, the spacer members 160 and the second substrate 140 in a range of e.g. a few micrometers (alignment tolerances between the first substrate 120, the spacer members 160 and the second substrate 140 may be larger than the micro-fabrication tolerances of electrode structuring and may range, e.g., up to 10 µm).

It is to be noted that the ion trap concept illustrated in Figures 2A-2B provides for high mechanical stability and robustness, superior scalability in terms of electrical contactability, high accuracy of electrode structuring and high accuracy of bond junctions between the first substrate 120, the spacer members 160 and the second substrate 140. Further, the optical access realized by the top side opening 250 together with the first micro-fabricated electrode structure 125 formed by a highly doped semiconductor layer allow high precision and ease in manufacturing of the optical access. In addition, the lateral free spaces 260 allow for wide aperture lateral optical access (which may, e.g., specifically be used for ion cooling). As a result, the device 200 for controlling trapped ions allows scalability to large numbers of ions and large trap dimensions while maintaining high optical accessibility to the ion traps.

It is to be noted that in Figure 2A the multi-layer metal interconnect 135 and the dielectric material 130 are not depicted for ease of illustration. However, a multi-layer metal interconnect as shown in Figure 1 is also provided in the device 200 for controlling trapped ions of Figures 2A-2B. Further, the first micro-fabricated electrode structure 125 is exemplified by a pattern of stripe electrodes (e.g. RF stripe electrodes and DC stripe electrodes). A variety of different electrode layouts is available in the art.

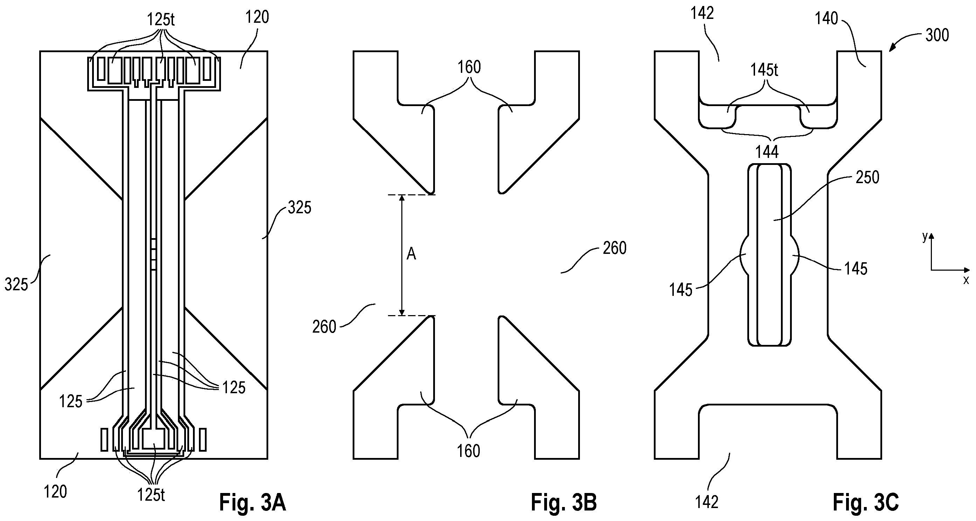

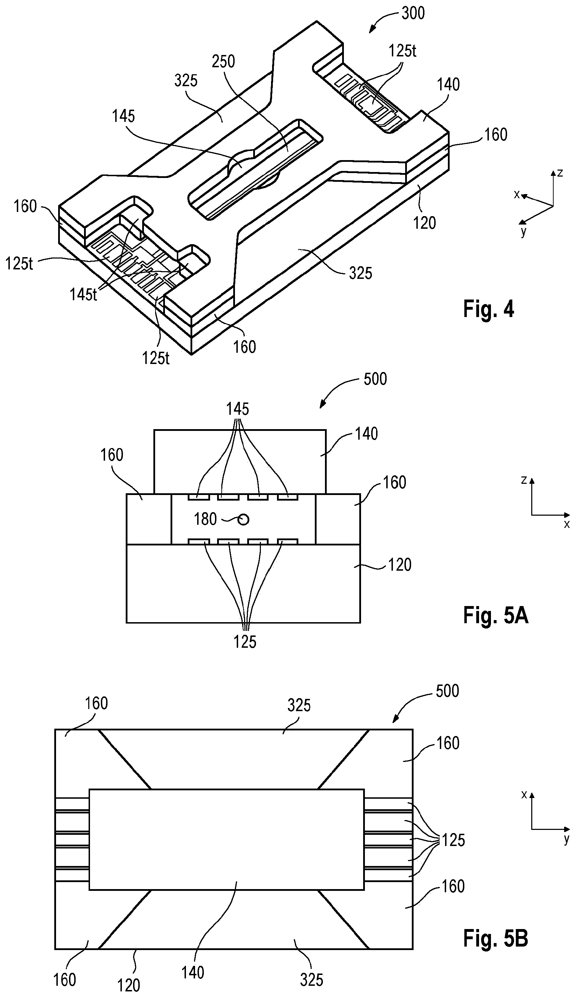

Figures 3A-3C and Figure 4 illustrate another embodiment of a device 300 for controlling trapped ions. The device 300 is similar to device 200, and reference is made to the above description in order to avoid reiteration. Again, the first substrate 120 and the second substrate 140 may be formed by semiconductor chips, in this example silicon chips. The spacer members 160 are, in this example, made of glass. The first micro-fabricated electrode structure 125 is, in this example, made of a metal material such as, e.g., Au. The second micro-fabricated electrode structure 145 may, e.g., be formed of a layer of highly doped semiconductor material, e.g. degenerate silicon. Again, the second micro-fabricated electrode structure 145 may alternatively be made of a metal material such as, e.g., Au.

As apparent from Figures 3A-3C and Figure 4, the design of the device 300 for controlling trapped ions provides for vertical (through top side openings 250) and lateral optical access to the ion trap zone. To this end, the spacer members 160 may, e.g., be aligned with corners of the first substrate 120 and/or of the second substrate 140 and may define a free space 260 for optical access which may have a tapering or trapezoidal shape.

Figure 3A illustrates the first substrate 120, the first micro-fabricated electrode structure 125 formed on the first substrate 120 (again exemplified by a pattern of stripe electrodes) and (optional) metallized zones 325 formed over the first substrate 120 (e.g. on the dielectric material 130 which is not shown in Figures 3A-3C and 4) and located in the area of the free space 260 defined between the spacer members (see Figure 3B). The metallized zones 325 may be formed by the same structured metallization layer as the first micro-fabricated electrode structure 125. Further, Figure 3A illustrates terminal lands 125t of the first micro-fabricated electrode structure 125 available for electrically connecting the micro-fabricated electrode structure 125 including its RF and DC electrodes via connectors (not shown, e.g. bond wires) to external circuitry (not shown).

Figure 3B illustrates an example in which the spacer is formed by, e.g., 4 spacer members 160 which are aligned with corners of the first substrate 120. In this and in other embodiments disclosed herein, an aperture A defined by the spacer members 160 in lateral Y-direction may have, e.g., a dimension in a range between 0.5 and 1.5 mm. The aperture A defines the length of the free space 260 in Y-direction. In this and in other embodiments disclosed herein, the size of the aperture A may, e.g., be similar to or identical with the length of the top side opening 250 in the same direction.

The second substrate 140 may have recesses 142 at its ends (in the Y-direction) configured to provide space for electrically connecting the first micro-fabricated electrode structure 125 at terminal lands 125t to external circuitry. Further, additional recesses 144 may be provided in the second substrate 140 for electrically connecting the second micro-fabricated electrode structure 145 to external circuitry. To this end, the second micro-fabricated electrode structure 145 may be electrically connected with exposed terminal lands 145t which allow to attach electrical connectors (not shown, e.g. bond wires) through the recesses 144 to the terminal lands 145t of the second micro-fabricated electrode structure 145. By way of example, the second micro-fabricated electrode structure 145 may be implemented by two (or more) stripe electrodes which are arranged at both sides along the top side opening 250 and which can be connected to external circuitry at the terminal lands 145t.

In particular in the embodiments (devices 200 and 300) in which the second micro-fabricated electrode structure 145 is made of a highly-doped (degenerate) silicon layer, the second substrate 140 may, e.g., be implemented by a SOI substrate, wherein the embedded silicon layer of the SOI substrate is processed (e.g. doped and structured) on wafer level to form the second micro-fabricated electrode structure 145. Alternatively, the second substrate 140 may, e.g., be implemented by a bulk silicon substrate and the second micro-fabricated electrode structure 145 may be formed in a surface layer of this bulk silicon substrate 140 on wafer level.

It is to be noted that in all embodiments described herein, the second micro-fabricated electrode structure 145 may also be formed of a metal layer (instead of a highly doped semiconductor layer) and/or that a multi-layer metal interconnect (similar to the multi-layer metal interconnect 135 and the dielectric material 130 as depicted in Figure 1) may be provided in the second substrate 140 in order to electrically connect the second micro-fabricated electrode structure 145 (either formed by a structured degenerate silicon layer or by a structured metallization layer) to external circuitry.

Figures 5A and 5B illustrate another embodiment of a device 500 for controlling trapped ions. The device 500 is similar to the device 200 described above, and reference is made to the above description to avoid reiteration. Device 500 distinguishes over device 200 of Figure 2 by using a structured metal layer to form the second micro-fabricated electrode structure 145. Further, in this example, there is no optical access in Z-direction from the top side to the ion trap of the device 500, since the second substrate 140 may, e.g., have no top side opening 250.

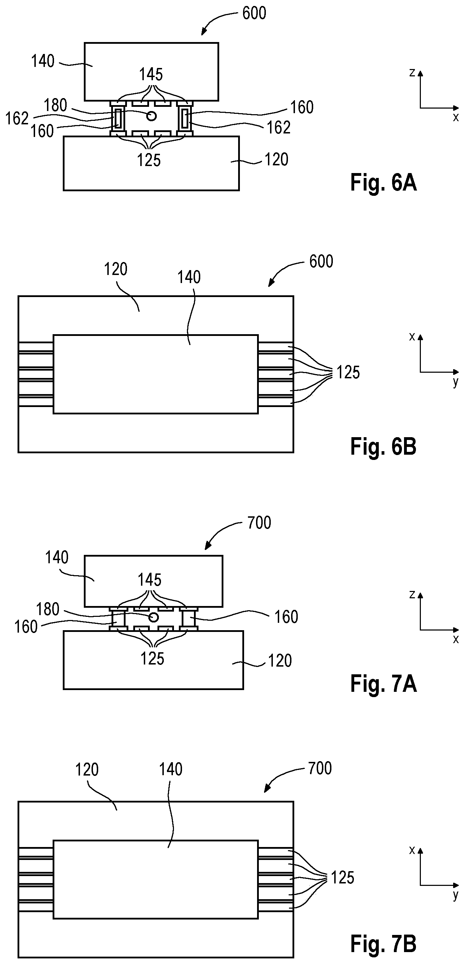

Figures 6A and 6B illustrate another embodiment of a device 600 for controlling trapped ions. This embodiment may be similar to the devices 100, 200, 300, 500, and reference is made to the above description. However, the device 600 distinguishes from the devices 100, 200, 300, 500 by using spacer members 160 which comprise or are made of a semiconductor material (e.g. silicon) coated by a metal layer 162. The metal layer 162 may cover the side walls of the spacer members 160 and, e.g., also the bottom and top surfaces of the spacer members 160. The metal of the metal layer 162 may be a chemically inert metal such as, e.g., Au or Pt to avoid surface charge generation at surfaces of the spacer members 160 facing the ion 180 in the ion trap. Further, the metal may be used as an interface metal for bonding the semiconductor members 160 to the first and/or second substrates 120, 140.

The device 600 for controlling trapped ions again is not equipped with a vertical optical access. However, in other examples, the second substrate 140 may be provided with a top side opening 250 as described before and e.g. illustrated in Figures 3A-3C and Figure 4.

Figures 7A-7B illustrate a device 700 for controlling trapped ions in accordance with another embodiment of the disclosure. The device 700 may be designed identical to device 600 except that the spacer members 160 are formed by metal bumps. Such metal bumps 160 may be generated by known micro-fabrication techniques such as, e.g., electroless plating or electroplating (galvanic plating). To this end, the base substrate (e.g. first substrate 120 or second substrate 140) on which the metal bumps are generated may be provided with a seed layer or pre-metallization layer on which the spacer members 160 (metal bumps) are grown. The metal bumps may be formed on wafer level, i.e. on a wafer from which the first substrates 120 or the second substrates 140 are singulated.

It is to be noted that this embodiment may have a limited vertical trap height due to limitations of micro-fabricating metal bumps of heights equal to or greater than 50 µm or 100 µm. Though this may impact lateral optical access to the ion trap, the design as such is highly scalable and easy to manufacture by known micro-fabrication processes.

In general, the concept of using spacer members 160 formed by semiconductor material coated by a metal layer (Figures 6A-6B) and the concept of using spacer members 160 formed by metal bumps (Figures 7A-7B) are applicable to all embodiments and exemplary devices 100, 200, 300, 500, 600, 700 disclosed herein.

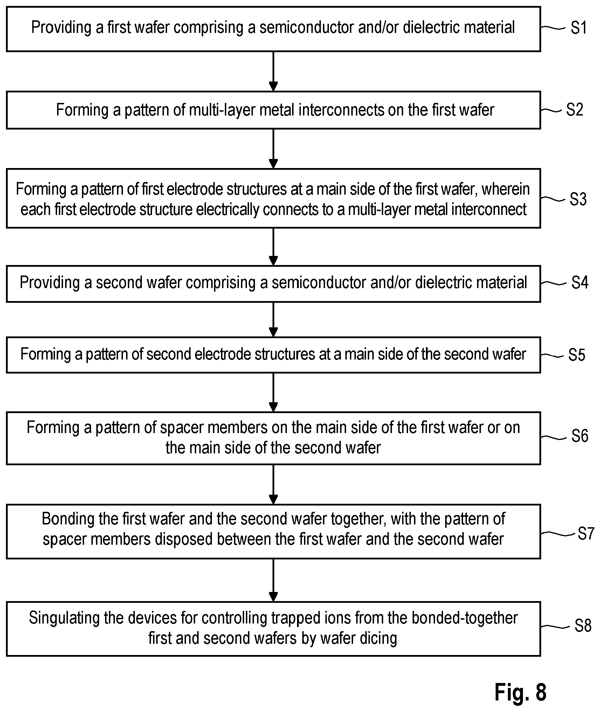

Referring to Figure 8, a process of manufacturing devices for controlling trapped ions such as, e.g., devices 100, 200, 300, 500, 600, 700 uses micro-fabrication steps and wafer-bonding techniques. More specifically, at S1 a first wafer comprising a semiconductor and/or dielectric material is provided. The first wafer may have dimensions in the lateral direction corresponding to common wafer diameters such as e.g. 10.16 cm (4 inches), 15.24cm (6 inches), 20.32 cm (8 inches), 25.4 cm (10 inches), 30.48 cm (12 inches).

At S2, a pattern of multi-layer metal interconnects is formed on the first wafer. Standard wafer-level micro-fabrication techniques including metal deposition techniques (e.g. PVD, CVD, sputtering) and lithography techniques may be used. The formation of the multi-layer metal interconnects may comprise the generation of insulating dielectric layers arranged below and/or between the metal layers.

At S3 a pattern of first electrode structures is formed at a main side of the first wafer, wherein each first electrode structure electrically connects to a multi-layer metal interconnect. The pattern of first electrode structures may be formed by wafer-level micro-fabrication techniques as mentioned above. This allows to produce high accuracy electrode layouts for ion trapping. Each pattern may provide for a first electrode structure of a specific device for controlling trapped ions. The pattern of first electrode structures may comprise a plurality of DC electrodes and RF electrodes.

At S4 a second wafer comprising a semiconductor and/or dielectric material is provided. The second wafer may be of different material as the first wafer or may be of the same material as the first wafer. In some embodiments, in particular if a degenerate silicon second electrode structure is used, it may, e.g., be a bulk silicon wafer or a SOI wafer. The second wafer may have dimensions in the lateral direction corresponding to common wafer diameters such as e.g. 10.16 cm (4 inches), 15.24cm (6 inches), 20.32 cm (8 inches), 25.4 cm (10 inches), 20.48 cm (12 inches).

At S5 a pattern of second electrode structures is formed at a main side of the second wafer. The pattern of second electrode structures may be formed by wafer-level micro-fabrication techniques as mentioned above. Each pattern may provide for a second electrode structure of a specific device for controlling trapped ions.

At S6 a pattern of spacer members is formed on the main side of the first wafer or on the main side of the second wafer.

In some examples the spacer members are generated from a spacer wafer. The spacer wafer may have the same or a similar size than the first wafer and/or the second wafer. The spacer wafer may, e.g., be of the same material or of another material as one or both of the first wafer and the second wafer.

If a spacer wafer is used for producing the spacer members, the spacer wafer may be structured to form a structured spacer wafer including a pattern of spacer members (e.g. 4 spacer members per device). This structuring process can be performed by wafer-level micro-fabrication techniques, e.g. techniques known in the art of micro-electro-mechanical systems (MEMS). Such processes allow to produce micro-systems with high topology (e.g. one or more hundreds of micrometers) as used in the devices for controlling trapped ions as disclosed herein.

The structured spacer wafer is then bonded to the first wafer and/or to the second wafer. This substrate wafer-to-spacer wafer bonding step may be carried out by wafer bonding techniques such as, e.g., glass bonding techniques or eutectic bonding or anodic bonding or thermocompression bonding. Further suitable bonding techniques are adhesive bonding (an intermediate layer is applied to one of the wafers, e.g. by spin-coating, spray, etc. and "sticks" the wafers together once it is cured) and SLID (Solid Liquid Interdiffusion) bonding, where a two-phase system with different melting points is used to generate an intermetallic phase, wherein the intermetallic phase generation happens already at relatively low temperatures.

In some examples glass wafer bonding techniques are used, which can be applied for generating bonds between all combinations of semiconductor and/or dielectric materials. Glass bonding does not require any metal layer as bonding agent. For instance, in particular if the spacer wafer comprises or is of glass, glass-bonding techniques may be used.

Eutectic bonding may, e.g., be used for bonding a semiconductor (e.g. silicon wafer) to another semiconductor wafer (e.g. silicon wafer) or to a glass wafer (e.g. the spacer wafer). In eutectic bonding an intermediate interface metal layer (e.g. of Au or Al) is used to couple the wafers to be bonded.

According to other examples, anodic bonding may be used. In anodic bonding a glass wafer or a glass layer on a semiconductor wafer is bonded to another semiconductor wafer. That is, this technique does not require any metal layer for bonding. It allows both to bond semiconductor wafers (plus an intermediate glass layer) or a semiconductor wafer and glass wafer together.

Other suitable wafer bonding techniques comprise thermocompression bonding (also referred to as diffusion bonding). In thermocompression bonding two metals, e.g. Au-Au, are brought into contact and force and heat is applied simultaneously. This bonding technique may, e.g., be used for device 600 for controlling trapped ions by virtue of the metal layer 162 and the corresponding metal layers on the first and/or second substrates (wafers) 120, 140.

According to other examples, forming the pattern of spacer members on the main side of the first wafer or on the main side of the second wafer may comprise forming metal bumps by electro-plating or electroless plating on the respective wafer. Exemplary device 700 for controlling trapped ions may be manufactured that way.

At S7 the first wafer and the second wafer are bonded together, with the pattern of spacer members disposed between the first wafer and the second wafer. S7 may be carried out simultaneously with S6 or at a separate stage of the manufacturing process after S6 has been completed.

At S8 the devices for controlling trapped ions are singulated from the bonded-together first and second wafers by wafer dicing. Wafer dicing may involve mechanical sawing, laser dicing or other dicing techniques known in the art of micro-fabrication.

Although specific embodiments have been illustrated and described herein, it will be appreciated by those of ordinary skill in the art that a variety of alternate implementations may be substituted for the specific embodiments shown and described without departing from the scope of the present invention. The invention is defined in the appended claims.

## Claims

1. A device for controlling trapped ions, the device comprising:
a first substrate (120) comprising a semiconductor and/or dielectric material;
a first micro-fabricated electrode structure (125) disposed at a main side of the first substrate (120);
a second substrate (140) comprising a semiconductor and/or dielectric material;
a second micro-fabricated electrode structure (145) disposed at a main side of the second substrate (140) opposite the main side of the first substrate (120);
a plurality of spacer members (160) disposed between the first substrate (120) and the second substrate (140);
at least one ion trap configured to trap ions in a space between the first substrate (120) and the second substrate (140), the first micro-fabricated electrode structure (125) and the second micro-fabricated electrode structure (145) comprising electrodes of the ion trap; and
a multi-layer metal interconnect (135) formed on the first substrate (120) and electrically connected to the first micro-fabricated electrode structure (125),
an insulating dielectric material (130) arranged between metal layers (135_1, 135_2) of the multi-layer metal interconnect (135), **characterized in that**
the plurality of spacer members (160) are bonded to the first substrate (120) and to the second substrate (140).

2. The device of claim 1, wherein the first substrate (120) and/or the second substrate (140) is of silicon, silicon carbide, silicon-on-insulator, fused silica, or sapphire.

3. The device of claim 1 or 2, wherein at least some of the plurality of spacer members (160) are made of glass.

4. The device of claim 1 or 2, wherein at least some of the plurality of spacer members (160) comprise a semiconductor material coated by a metal layer (162).

5. The device of any of the preceding claims, wherein at least some of the plurality of spacer members (160) are spaced apart from each other to allow optical access between adjacent spacer members (160).

6. The device of claim 5, wherein the plurality of spacer members (160) comprises corner spacer members (160) aligned with corners of the first substrate (120) and/or the second substrate (140) and defining a free space for optical access having a trapezoidal shape.

7. The device of claim 1 or 2, wherein at least some of the plurality of spacer members (160) are formed by metal bumps.

8. The device of any of the preceding claims, wherein the first micro-fabricated electrode structure (125) is of metal and the second micro-fabricated electrode structure (145) is of metal.

9. The device of any of the claims 1 to 7, wherein the first micro-fabricated electrode structure (125) is of metal, the second substrate (140) comprises a semiconductor material and the second micro-fabricated electrode structure (145) is formed by a highly doped layer of the semiconductor material.

10. The device of any of the preceding claims, wherein the multi-layer metal interconnect (135) comprises a first metallization layer and a second metallization layer, the first metallization layer is a shielding layer and the second metallization layer is structured as an electrical redistribution layer and electrically connected to the first micro-fabricated electrode structure (125).

11. A method of manufacturing devices for controlling trapped ions, the method comprises:
providing a first wafer comprising a semiconductor and/or dielectric material;
forming a pattern of multi-layer metal interconnects (135) and insulating dielectric material (130) arranged between metal layers (135_1, 135_2) of the multi-layer metal interconnect (135)on the first wafer;
forming a pattern of first electrode structures (125) at a main side of the first wafer, wherein each first electrode structure (125) electrically connects to a multi-layer metal interconnect (135);
providing a second wafer comprising a semiconductor and/or dielectric material;
forming a pattern of second electrode structures (145) at a main side of the second wafer;
forming a pattern of spacer members (160) on the main side of the first wafer or on the main side of the second wafer;
bonding the first wafer and the second wafer together, with the pattern of spacer members (160) disposed between the first wafer and the second wafer; and
singulating the devices for controlling trapped ions from the bonded-together first and second wafers by wafer dicing.

12. The method of claim 11, wherein forming the pattern of spacer members (160) on the main side of the first wafer or on the main side of the second wafer comprises:
providing a spacer wafer;
structuring the spacer wafer to form a structured spacer wafer including the pattern of spacer members (160); and
bonding the structured spacer wafer to the first wafer and/or to the second wafer.

13. The method of claim 11, wherein forming the pattern of spacer members (160) on the main side of the first wafer or on the main side of the second wafer comprises:
forming metal bumps by electroplating or electroless plating on the main side of the first wafer or on the main side of the second wafer.

14. The method of any of claims 11 to 13, wherein bonding the first wafer and the second wafer together is carried out by glass bonding techniques or eutectic bonding or anodic bonding or thermocompression bonding or adhesive bonding or solid liquid interdiffusion bonding.

## Patentansprüche

1. Vorrichtung zum Steuern eingefangener Ionen, wobei die Vorrichtung Folgendes umfasst:
ein erstes Substrat (120), das ein Halbleitermaterial und/oder ein dielektrisches Material enthält;
eine erste mikrogefertigte Elektrodenstruktur (125), die an einer Hauptseite des ersten Substrats (120) angeordnet ist;
ein zweites Substrat (140), das ein Halbleitermaterial und/oder ein dielektrisches Material enthält;
eine zweite mikrogefertigte Elektrodenstruktur (145), die an einer Hauptseite des zweiten Substrats (140) gegenüber der Hauptseite des ersten Substrats (120) angeordnet ist;
mehrere Abstandshalterelemente (160), die zwischen dem ersten Substrat (120) und dem zweiten Substrat (140) angeordnet sind;
mindestens eine Ionenfalle, die dazu ausgelegt ist, Ionen in einem Raum zwischen dem ersten Substrat (120) und dem zweiten Substrat (140) einzufangen, wobei die erste mikrogefertigte Elektrodenstruktur (125) und die zweite mikrogefertigte Elektrodenstruktur (145) Elektroden der Ionenfalle umfassen; und
eine mehrschichtige Metallzwischenverbindung (135), die auf dem ersten Substrat (120) ausgebildet und mit der ersten mikrogefertigten Elektrodenstruktur (125) elektrisch verbunden ist,
ein isolierendes dielektrisches Material (130), das zwischen den Metallschichten (135_1, 135_2) der mehrschichtigen Metallzwischenverbindung (135) angeordnet ist, **dadurch gekennzeichnet, dass** die mehreren Abstandshalterelemente (160) mit dem ersten Substrat (120) und dem zweiten Substrat (140) gebondet sind.

2. Vorrichtung nach Anspruch 1, wobei das erste Substrat (120) und/oder das zweite Substrat (140) aus Silicium, Siliciumcarbid, Silicium-auf-Isolator, Quarzglas oder Saphir besteht.

3. Vorrichtung nach Anspruch 1 oder 2, wobei zumindest einige der mehreren Abstandshalterelemente (160) aus Glas bestehen.

4. Vorrichtung nach Anspruch 1 oder 2, wobei zumindest einige der mehreren Abstandshalterelemente (160) ein Halbleitermaterial umfassen, das mit einer Metallschicht (162) beschichtet ist.

5. Vorrichtung nach einem der vorhergehenden Ansprüche, wobei zumindest einige der mehreren Abstandshalterelemente (160) voneinander beabstandet sind, um einen optischen Zugang zwischen benachbarten Abstandshalterelementen (160) zu ermöglichen.

6. Vorrichtung nach Anspruch 5, wobei die mehreren Abstandshalterelemente (160) Eckabstandshalterelemente (160) umfassen, die auf die Ecken des ersten Substrats (120) und/oder des zweiten Substrats (140) ausgerichtet sind und einen freien Raum für den optischen Zugang mit Trapezform definieren.

7. Vorrichtung nach Anspruch 1 oder 2, wobei zumindest einige der mehreren Abstandshalterelemente (160) durch Metallhöcker ausgebildet sind.

8. Vorrichtung nach einem der vorhergehenden Ansprüche, wobei die erste mikrogefertigte Elektrodenstruktur (125) aus Metall besteht und die zweite mikrogefertigte Elektrodenstruktur (145) aus Metall besteht.

9. Vorrichtung nach einem der Ansprüche 1 bis 7, wobei die erste mikrogefertigte Elektrodenstruktur (125) aus Metall besteht, das zweite Substrat (140) ein Halbleitermaterial enthält und die zweite mikrogefertigte Elektrodenstruktur (145) durch eine stark dotierte Schicht des Halbleitermaterials ausgebildet ist.

10. Vorrichtung nach einem der vorhergehenden Ansprüche, wobei die mehrschichtige Metallzwischenverbindung (135) eine erste Metallisierungsschicht und eine zweite Metallisierungsschicht umfasst, wobei die erste Metallisierungsschicht eine Abschirmschicht ist und die zweite Metallisierungsschicht als elektrische Umverteilungsschicht strukturiert und mit der ersten mikrogefertigten Elektrodenstruktur (125) elektrisch verbunden ist.

11. Verfahren zum Herstellen von Vorrichtungen zum Steuern eingefangener Ionen, wobei das Verfahren umfasst:
Bereitstellen eines ersten Wafers, der ein Halbleitermaterial und/oder ein dielektrisches Material enthält;
Ausbilden eines Musters von mehrschichtigen Metallzwischenverbindungen (135) und einem isolierenden dielektrischen Material (130), das zwischen Metallschichten (135_1, 135_2) der mehrschichtigen Metallzwischenverbindung (135) angeordnet ist, auf dem ersten Wafer;
Ausbilden eines Musters von ersten Elektrodenstrukturen (125) auf einer Hauptseite des ersten Wafers, wobei jede erste Elektrodenstruktur (125) mit einer mehrschichtigen Metallzwischenverbindung (135) elektrisch verbunden ist;
Bereitstellen eines zweiten Wafers, der ein Halbleitermaterial und/oder ein dielektrisches Material enthält;
Ausbilden eines Musters von zweiten Elektrodenstrukturen (145) auf einer Hauptseite des zweiten Wafers;
Ausbilden eines Musters von Abstandshalterelementen (160) auf der Hauptseite des ersten Wafers oder auf der Hauptseite des zweiten Wafers;
Bonden des ersten Wafers und des zweiten Wafers miteinander, wobei das Muster von Abstandshalterelementen (160) zwischen dem ersten Wafer und dem zweiten Wafer angeordnet ist; und
Vereinzeln der Vorrichtungen zum Steuern eingefangener Ionen von dem ersten und zweiten Wafer, die miteinander gebondet sind, durch Wafer-Zerteilung.

12. Verfahren nach Anspruch 11, wobei das Ausbilden des Musters von Abstandshalterelementen (160) auf der Hauptseite des ersten Wafers oder auf der Hauptseite des zweiten Wafers umfasst:
Bereitstellen eines Abstandshalter-Wafers;
Strukturieren des Abstandshalter-Wafers, um einen strukturierten Abstandshalter-Wafer zu bilden, der das Muster von Abstandshalterelementen (160) aufweist; und
Bonden des strukturierten Abstandshalter-Wafers mit dem ersten Wafer und/oder mit dem zweiten Wafer.

13. Verfahren nach Anspruch 11, wobei das Ausbilden des Musters von Abstandshalterelementen (160) auf der Hauptseite des ersten Wafers oder auf der Hauptseite des zweiten Wafers umfasst:
Ausbilden von Metallhöckern durch Elektroplattieren oder nicht galvanisches Plattieren auf der Hauptseite des ersten Wafers oder auf der Hauptseite des zweiten Wafers.

14. Verfahren nach einem der Ansprüche 11 bis 13, wobei das Bonden des ersten Wafers und des zweiten Wafers mittels Glasbondtechniken, eutektischem Bonden, anodischem Bonden, Thermokompressions-Bonden, Haft-Bonden oder Fest-Flüssig-Interdiffusions-Bonden ausgeführt wird.

## Revendications

1. Dispositif pour contrôler des ions piégés, le dispositif comprenant :
un premier substrat (120) comprenant un matériau semi-conducteur et/ou diélectrique ;
une première structure d'électrode micro-fabriquée (125) disposée sur un côté principal du premier substrat (120) ;
un second substrat (140) comprenant un matériau semi-conducteur et/ou diélectrique ;
une seconde structure d'électrode micro-fabriquée (145) disposée sur un côté principal du second substrat (140) opposé au côté principal du premier substrat (120) ;
une pluralité d'éléments d'espacement (160) disposés entre le premier substrat (120) et le second substrat (140) ;
au moins un piège à ions configuré pour piéger des ions dans un espace entre le premier substrat (120) et le second substrat (140), la première structure d'électrode micro-fabriquée (125) et la seconde structure d'électrode micro-fabriquée (145) comprenant des électrodes du piège à ions ; et
une interconnexion métallique multicouche (135) formée sur le premier substrat (120) et connectée électriquement à la première structure d'électrode micro-fabriquée (125),
un matériau diélectrique isolant (130) agencé entre des couches métalliques (135_1, 135_2) de l'interconnexion métallique multicouche (135), **caractérisé en ce que** la pluralité d'éléments d'espacement (160) sont liés au premier substrat (120) et au second substrat (140).

2. Dispositif de la revendication 1, dans lequel le premier substrat (120) et/ou le second substrat (140) est de silicium, de carbure de silicium, de silicium-sur-isolant, de silice fusionnée, ou de saphir.

3. Dispositif de la revendication 1 ou 2, dans lequel au moins certains de la pluralité d'éléments d'espacement (160) sont faits de verre.

4. Dispositif de la revendication 1 ou 2, dans lequel au moins certains de la pluralité d'éléments d'espacement (160) comprennent un matériau semi-conducteur revêtu par une couche métallique (162).

5. Dispositif de quelconques des revendications précédentes, dans lequel au moins certains de la pluralité d'éléments d'espacement (160) sont espacés les uns des autres pour permettre l'accès optique entre des éléments d'espacement adjacents (160).

6. Dispositif de la revendication 5, dans lequel la pluralité d'éléments d'espacement (160) comprend des éléments d'espacement de coin (160) alignés avec des coins du premier substrat (120) et/ou du second substrat (140) et définissant un espace libre pour l'accès optique ayant une forme trapézoïdale.

7. Dispositif de la revendication 1 ou 2, dans lequel au moins certains de la pluralité d'éléments d'espacement (160) sont formés par des bosses métalliques.

8. Dispositif de quelconques des revendications précédentes, dans lequel la première structure d'électrode micro-fabriquée (125) est de métal et la seconde structure d'électrode micro-fabriquée (145) est de métal.

9. Dispositif de quelconques des revendications 1 à 7, dans lequel la première structure d'électrode micro-fabriquée (125) est de métal, le second substrat (140) comprend un matériau semi-conducteur et la seconde structure d'électrode micro-fabriquée (145) est formée par une couche hautement dopée du matériau semi-conducteur.

10. Dispositif de quelconques des revendications précédentes, dans lequel l'interconnexion métallique multicouche (135) comprend une première couche de métallisation et une seconde couche de métallisation, la première couche de métallisation est une couche de protection et la seconde couche de métallisation est structurée sous forme de couche de redistribution électrique et connectée électriquement à la première structure d'électrode micro-fabriquée (125).

11. Procédé de fabrication de dispositifs pour contrôler des ions piégés, le procédé comprend :
la fourniture d'une première tranche comprenant un matériau semi-conducteur et/ou diélectrique ;
la formation d'un motif d'interconnexions métalliques multicouches (135) et d'un matériau diélectrique isolant (130) agencé entre des couches métalliques (135_1, 135_2) de l'interconnexion métallique multicouche (135) sur la première tranche ;
la formation d'un motif de premières structures d'électrode (125) sur un côté principal de la première tranche, dans lequel chaque première structure d'électrode (125) se connecte électriquement à une interconnexion métallique multicouche (135) ;
la fourniture d'une seconde tranche comprenant un matériau semi-conducteur et/ou diélectrique ;
la formation d'un motif de secondes structures d'électrode (145) sur un côté principal de la seconde tranche ;
la formation d'un motif d'éléments d'espacement (160) sur le côté principal de la première tranche ou sur le côté principal de la seconde tranche ;
la liaison de la première tranche et de la seconde tranche ensemble, avec le motif d'éléments d'espacement (160) disposé entre la première tranche et la seconde tranche ; et
la singularisation des dispositifs pour contrôler des ions piégés provenant des première et seconde tranches liées ensemble par découpage en dés de tranche.

12. Procédé de la revendication 11, dans lequel la formation du motif d'éléments d'espacement (160) sur le côté principal de la première tranche ou sur le côté principal de la seconde tranche comprend :
la fourniture d'une tranche d'espacement ;
la structuration de la tranche d'espacement pour former une tranche d'espacement structurée incluant le motif d'éléments d'espacement (160) ; et
la liaison de la tranche d'espacement structurée à la première tranche et/ou à la seconde tranche.

13. Procédé de la revendication 11, dans lequel la formation du motif d'éléments d'espacement (160) sur le côté principal de la première tranche ou sur le côté principal de la seconde tranche comprend :
la formation de bosses métalliques par dépôt électrolytique ou dépôt autocatalytique sur le côté principal de la première tranche ou sur le côté principal de la seconde tranche.

14. Procédé de quelconques des revendications 11 à 13, dans lequel la liaison de la première tranche et de la seconde tranche ensemble est effectuée par des techniques de liaison à verre ou par liaison eutectique ou liaison anodique ou liaison par thermocompression ou liaison adhésive ou liaison par interdiffusion solide-liquide.
